Europäisches Patentamt

European Patent Office

Office européen des brevets

(11) Veröffentlichungsnummer: **0 226 693**
**B1**

(12) # EUROPÄISCHE PATENTSCHRIFT

(45) Veröffentlichungstag der Patentschrift:
28.06.89

(51) Int. Cl.⁴: **B65B 9/10**, B65B 51/30

(21) Anmeldenummer: 86105780.0

(22) Anmeldetag: 25.04.86

(54) Verpackungsmaschine zum Herstellen, Füllen und Verschliessen von Beuteln.

(30) Priorität: 20.12.85 DE 3545228

(43) Veröffentlichungstag der Anmeldung:
01.07.87 Patentblatt 87/27

(45) Bekanntmachung des Hinweises auf die Patenterteilung:
28.06.89 Patentblatt 89/26

(84) Benannte Vertragsstaaten:
DE FR GB IT NL

(56) Entgegenhaltungen:
BE-A- 827 252
FR-A- 2 372 728

(73) Patentinhaber: ROVEMA Verpackungsmaschinen
GmbH, Postfach 20, D-6301 Fernwald-Annerod(DE)

(72) Erfinder: Kammler, Roman, Dr. Ing., Wallstrasse 2,
D-6520 Worms(DE)
Erfinder: Ade, Reiner, Dr., Ritterhausstrasse 8,
D-6350 Bad Nauheim(DE)
Erfinder: Baur, Walter, Dr., Herzbergstrasse 37-39,
D-6466 Gruendau(DE)

(74) Vertreter: Missling, Arne, Dipl.-Ing. et al, Patentanwälte
Dipl.-Ing. R. Schlee Dipl.-Ing. A. Missling
Bismarckstrasse 43, D-6300 Giessen(DE)

**Beschreibung**

Die Erfindung bezieht sich auf eine Verpackungsmaschine gemäß dem Oberbegriff von Anspruch 1.

Aus der FR-A 2 372 728 ist eine Verpackungsmaschine dieser Art bekannt, bei welcher der Abzug des Hüllstoffbandes kontinuierlich erfolgt. Die Bewegungsgeschwindigkeit der Quersiegelbacken während ihres Kontakts mit dem Folienschlauch kann etwas kleiner als die Geschwindigkeit des Hüllstoffbandes sein, wodurch sich Hüllstoff-Material oberhalb der Siegelbacken ansammelt. Die Vorrichtung ist für die Bildung von Verpackungen bestimmt, die schlauchförmig gestaltet sind, insbesondere in Form eines Parallelepipeds bzw. Quaders, und die vorzugsweise als Flüssigkeits-Behälter dienen. Das Material für solche Verpackungen muß naturgemäß eine gewisse Wandstärke und Steifigkeit besitzen, so daß verhältnismäßig robuste Verarbeitungs-Bedingungen auftreten können. Dazu trägt es bei, daß das Füllgut beim Siegeln der Verpackung nicht eng umschlossen wird, weil ein Luft-Ausweichvolumen zur Verfügung stehen muß. Die Packungsmaße sind konstant, brauchen also nicht variiert zu werden. Derartige Verpackungsmaschinen haben den Vorteil, daß die Quersiegelung, mit der jeweils ein gefüllter Beutel verschlossen und für den nächsten Beutel die Bodennaht hergestellt wird, während der Abzugsbewegung des Folienschlauches stattfindet, so daß die für den Abzug nötige Zeit für das Siegeln genutzt werden kann. Damit läßt sich die Herstellungszeit pro Beutel im Vergleich mit solchen Verpackungsmaschinen verringern, bei denen die Quersiegelung bei stillstehendem Folienschlauch stattfindet.

Bei einer bekannten Verpackungsmaschine der genannten Art (DE-AS 21 26 498) erfolgt der Vorschub des Folienschlauches durch die Schweißbacken, wobei die Abzugsbewegung nicht kontinuierlich ist, da nach dem Lösen derjenigen Quersiegelbacken vom Schlauch, die Quersiegelnähte hergestellt haben und dem Angreifen der folgenden Quersiegelbacken notwendig eine gewisse Zeit verstreicht. Bei der bekannten Verpackungsmaschine sind die sternförmig ausgebildeten Siegelbackenträger an schwenkbaren Armen gelagert. Durch Verschwenkung dieser Arme werden die Quersiegelbacken an den Folienschlauch angenähert und klemmen diesen fest. Bei weiterer Drehung der Siegelbackenträger wird der Hüllstoffschlauch abgezogen. Bei dieser Abwärtsbewegung ist es erforderlich, daß die beiden Achsen der Siegelbackenträger relativ zueinander verschoben werden. Die Siegelbackenträger samt den an ihnen angeordneten Siegelbacken haben notwendig hohe Gewichte, so daß erhebliche Massenkräfte entstehen, wodurch die Arbeitsgeschwindigkeit begrenzt wird. Auch der intermittierende Abzug des Hüllstoffschlauches beeinträchtigt die Arbeitsgeschwindigkeit.

Bei einer weiteren bekannten Verpackungsmaschine (US-PS 3 522 689), die ähnlich ausgebildet ist, wie die zuvor besprochene Maschine nach der DE-AS 21 26 498, sind an jedes Siegelbackenträgers insgesamt sechs Siegelbacken angeordnet, so daß ein Siegelbackenpaar am Hüllstoffschlauch angreifen kann, bevor die vorausgegangenen Siegelbacken den Folienschlauch freigegeben haben. Dadurch wird ein kontinuierlicher Abzug der Folie erreicht, jedoch läßt sich die Beutellänge nicht verändern, wenn der kontinuierliche Abzug beibehalten werden soll. Würde die Beutellänge dadurch verdoppelt, daß nur drei der sechs Backen jedes Siegelbackenträgers verwendet werden, so wäre ein kontinuierlicher Abzug nicht mehr möglich.

Bei einer weiteren bekannten Verpackungsmaschine (DE-PS 31 41 431) rotieren Quersiegelbacken um feststehende Achsen. Um die gleichen Achsen rotieren auch fest mit Haltern für die Quersiegelbacken verbundene Reibsegmente, mit denen der Folienschlauch abgezogen wird. Zwischen den voreilenden Reibsegmenten und den nachfolgenden Quersiegelbacken befindet sich ein Freiraum für das Einfüllen von Füllgut. Nachteilig an dieser Verpackungsmaschine ist die sehr kurze Schweißzeit. Auch ist die Bewegungscharakteristik der Quersiegelbacken so, daß diese zunächst nur mit Kanten am Hüllstoffschlauch anliegen. Die kurze Schweißzeit begrenzt die Anwendung der bekannten Maschine auf wenige Hüllstoffe bestimmter Beschaffenheit. Infolge der anfänglichen, nur linienförmigen Berührung zwischen Quersiegelbacken und Hüllstoffschlauch, besteht die Gefahr, daß der Hüllstoff überhitzt wird. Während der Schließbewegung der Quersiegelbacken besteht zwischen den Schweißflächen der beiden Quersiegelbacken ein Keil, in den Füllgut fallen kann, wodurch die Versiegelung beeinträchtigt wird. Problematisch ist bei dieser bekannten Maschine auch die Anordnung von Messern zum Abschneiden fertiger Beutel. Die Beutelgrößen können nur in engen Grenzen variiert werden.

Bekannt ist schließlich auch eine Verpackungsmaschine für die Verpackung von Einzelstücken, bei der der Folienschlauch horizontal bewegt wird (DE-C 2 701 443). In einer Schweiß-und Schneidstation werden auf kreisförmigen Bahnen Schweiß- und Schneidbacken bewegt, aber nur parallel zu sich selber verlagert, so daß ihre Schweißflächen stets dem Folienschlauch zugewendet sind. Dies wird mit Hilfe von rechtwinklig zueinander bewegbaren Schlitten erreicht, von denen einer mit einem Exzenter zusammenwirkt. Dank der Parallelbewegung der Backen läuft zwar das Anlegen der Backen an den Folienschlauch vorteilhaft ab, doch lassen sich bei einer gegebenen Bewegungsgeschwindigkeit des Folienschlauches nur relativ kurze Schweißzeiten verwirklichen.

Der Erfindung liegt die Aufgabe zugrunde, eine Verpackungsmaschine der eingangs erwähnten Art so auszubilden, daß die kontinuierliche Verarbeitung von Beuteln aus unterschiedlichen Hüllstoffen mit beliebig wählbarer Beutellänge möglich und eine besonders hohe Arbeitsleistung erzielbar ist.

Nach der Erfindung sind zum Abzug des Hüllstoffbandes ständig umlaufende Hüllstofförderer in Form von Abzugsrollen oder Abzugsbändern vorgesehen, die im Bereich unterhalb der Formschulter mit Reibschluß am Hüllstoff anliegen, wobei das Verhältnis zwischen der Umfangsgeschwindigkeit der Hüllstofförderer und der Siegelbackenträger einstellbar ist. Anders als bei den bekannten Maschinen mit sogenanntem Zangenabzug durch die Siegelbacken werden hier also besondere Hüllstofförderer eingesetzt, wie sie bei Schlauchbeutel-Verpackungsmaschinen an sich bekannt sind. Infolge der Trennung von Hüllstofftransport und Quersiegelung kann ein kontinuierlicher Hüllstoffabzug auch beibehalten bleiben, wenn die Beutellängen variiert werden. Im Gegensatz zu der bekannten Maschine nach der US-A 3 522 689 brauchen dabei nicht zwei Quersiegelbacken-Paare gleichzeitig mit dem Folienschlauch im Eingriff zu stehen. Verschiedene Beutellängen sind selbst dann herstellbar, wenn die Siegelbackenträger mit etwa gleichbleibender Winkelgeschwindigkeit rotieren; bei der Herstellung längerer Beutel findet eine Aufbauchung des unteren Endes des Folienschlauches statt. Es ist aber auch möglich und steuerungstechnisch unproblematisch, die Winkelgeschwindigkeit während des Umlaufes der Siegelbackenträger stark zu verändern. Um relativ lange Beutel herzustellen, wird dann die Umfangsgeschwindigkeit der Siegelbackenträger in einer Phase zwischen zwei Quersiegelungen relativ klein, hingegen bei der Herstellung kürzerer Beutel relativ groß gewählt. Auf diese Weise kann eine übermäßige Aufbauchung des Schlauchendes vermieden werden; eine geringere Aufbauchung ist jedoch für die Füllung des Beutels vorteilhaft.

Eine bevorzugte Aufführungsform der Erfindung zeichnet sich gemäß Anspruch 2 dadurch aus, daß die genannten Achsen ortsfest angeordnet und die Siegelbackenhalter in den Siegelbackenträgern radial verschiebbar sind, wobei jeder Siegelbackenhalter zwei jeweils an einer Führungsbahn eines Paares geführte Führungselemente aufweist, und beide Führungsbahnen die gleiche, in sich geschlossenen Form haben, jedoch parallel zueinander verschoben sind, und wobei die Quersiegelbacken mindestens im Bereich der Siegelzone, in der die Quersiegelbacken geradlinig in Abzugsrichtung des Hüllstoffschlauches verlaufen, rechtwinklig zum Hüllstoffschlauch orientiert sind.

Bei einer so ausgebildeten Verpackungsmaschine treten auch bei hoher Arbeitsgeschwindigkeit nur verhältnismäßig kleine Massenkräfte auf, da nicht die gesamten Siegelbackenträger diskontinuierlich bewegt werden, sondern lediglich die Bakkenhalter relativ kleine Bewegungen relativ zu den Siegelbackenträgern ausführen. Durch die besondere Führung der Backenhalter wird gewährleistet, daß die Quersiegelbacken von Anfang an mit ihren gesamten Heizflächen mit dem Hüllstoff in Berührung kommen. Dadurch werden Verbrennungen des Hüllstoffes sicher vermieden. Die Siegelzeit kann sich annähernd über einen vollen Arbeitstakt erstrecken, so daß auch bei hoher Taktzahl eine lange Siegelzeit zur Verfügung steht und so praktisch alle üblichen Hüllstoffe verarbeitet werden können.

Vorzugsweise ist eine dritte Führungsbahn vorgesehen, die zu einer der genannten Führungsbahnen konzentrisch ist, wobei an jeder Seite der Siegelbackenhalter eine der zueinander konzentrischen Führungsbahnen angeordnet ist (Anspruch 3). Dadurch erhält man eine große Steifigkeit der Anordnung auch dann, wenn die Siegelbacken verhältnismäßig lang ausgebildet sind.

Vorteilhafterweise hat jeder Siegelbackenträger eine Welle und zwei Führungsteile gemäß Anspruch 4. Damit lassen sich die Backenhalter besonders vorteilhaft aufhängen. Zweckmäßig ist auch die Trennung der Führungen für die radiale Bew-egung der Backenhalter und für deren Drehung gemäß Anspruch 5. Damit lassen sich große Gleitflächen für die radiale Führung herstellen.

Vorteilhaft ist die Ausbildung der Führungsbahnen als Nuten gemäß Anspruch 6, da hierdurch eine Zwangsführung er reicht wird. Im Prinzip jedoch ist es auch möglich, die Führungselemente durch Federkräfte an eine Führungsbahn anzudrücken.

Besonders günstig lassen sich die Backenhalter führen, wenn jeweils eine Führungsbahn auf einer Seite und eine Führungsbahn auf der anderen Seite des Siegelbackenträgers angeordnet ist (Anspruch 7). Wenn drei Führungsbahnen gemäß Anspruch 3 vorgesehen sind, ist es besonders vorteilhaft, diese konzentrischen Führungsbahnen so anzuordnen, daß sie mit Führungsrollen zusammenwirken, die beide konzentrisch zur Schwenkachse des Backenhalters sind. Dadurch wird der Backenhalter besonders günstig gehalten.

Die Form der Führungsbahnen läßt sich besonders leicht berechnen, wenn ein Führungselement gemäß Anspruch 8 zur Schwenkachse des zugeordneten Backenhalters konzentrisch ist. Die Form der Führungsbahnen kann dann z.B. vorteilhaft gemäß Anspruch 11 gewählt werden.

Im Prinzip genügt für jeden Siegelbackenträger eine einzige Siegelbacke. Besonders vorteilhaft jedoch ist die Anordnung von zwei Quersiegelbacken an einem Siegelbackenträger gemäß Anspruch 10. Auch können mehr als zwei Quersiegelbacken an einem Siegelbackenträger vorgesehen werden.

Gemäß einer weiteren Ausgestaltung sind die Siegelbackenträger relativ zueinander federnd nachgiebig gelagert (Anspruch 12). Die federnde Nachgiebigkeit kann konstruktiv vorteilhaft mit den Mitteln des Anspruches 13 gelöst werden. Durch die federnde Nachgiebigkeit kann ein definierter Druck der Quersiegelbacken gegeneinander eingestellt werden, wodurch eine gute Anpassung an die jeweilige Beschaffenheit des Hüllstoffes möglich ist.

Wegen der langen Kontaktzeit der Siegelbacken mit dem Hüllstoff ist auch ohne Probleme die Anordnung eines Messers in den Siegelbacken möglich, wobei die Messerbetätigung vorteilhafterweise gemäß Anspruch 13 durchgeführt wird. Zum Zurückführen des Messers ist vorteilhafterweise eine Rückdrückfeder gemäß Anspruch 14 angeordnet.

Damit die Arbeitsgeschwindigkeit weiter gesteigert werden kann, sind gemäß einer weiteren Ausgestaltung der Erfindung an jeder Quersiegelbacke Luftdüsen für Kühlluft zur Abkühlung der Siegelnaht vorgesehen (Anspruch 16). Damit läßt sich eine rasche Nahtabkühlung und damit rasche Verfestigung der Naht erreichen. Die Luftzuführung zu den Düsen erfolgt vorteilhafterweise mit den Mit-

teln des Anspruches 17. Zu einer gleichmäßigen Luftverteilung dienen die im Anspruch 18 angegebenen Einrichtungen, mit denen außer einer gleichmäßigen Luftverteilung auch der Luftdurchsatz bestimmt werden kann.

Im Prinzip ist es möglich, daß die Drehgeschwindigkeit der Wellen der Siegelbackenträger und die Abzugsgeschwindigkeit des Folienschlauches konstant sind und in einem bestimmten Verhältnis zueinander stehen. Die verhältnismäßig geringen Geschwindigkeitsänderungen, die in diesem Falle die Quersiegelbacken im Bereich der Siegelstation erfahren, können vom Schlauch ohne weiteres aufgefangen werden, zumal dieser durch das Füllgut ausgebeult wird. Es lassen sich aber auch gemäß den Ansprüchen 19 bis 21 Geschwindigkeitsanpassungen vornehmen, was insbesondere bei der Herstellung großer Beutel vorteilhaft sein kann.

Durch die Annäherung der Abzugsgeschwindigkeit für den Hüllstoff an die Fallgeschwindigkeit des zu verpackenden Gutes wird die höchstmögliche Leistung der Maschine erzielt. Das zu verpackende Gut wird weitestgehend geschont, da ein Aufprallen auf den Boden des Beutels vermieden wird. Vorteilhaft ist auch, daß die Bodennaht des zu füllenden Beutels nicht belastet wird; ein Füllvorgang kann mithin erfolgen, noch bevor die Beutelnaht durch Abkühlung fest geworden ist. Dies trägt wesentlich zur Erziehung einer hohen Arbeitsgeschwindigkeit bei. Praktisch werden die Verpackungsportionen während ihres Falles im Beutel eingeschlossen. Bei bestmöglicher Verwirklichung dieses Idealzustandes findet eine Belastung des Beutels während des Füllens überhaupt nicht mehr statt. Um jedoch mit genügender Sicherheit zu vermeiden, daß Füllgut in die Quernähte eingeschweißt wird, ist es zweckmäßig, einen gewissen Unterschied zwischen Gutgeschwindigkeit und Abzugsgeschwindigkeit einzuhalten.

In der Zeichnung ist ein Ausführungsbeispiel der Erfindung dargestellt. Es zeigen:

Fig. 1 in schematischer Darstellung eine Seitenansicht einer Verpackungsmaschine,

Fig. 2 eine teilweise vertikal geschnittene Seitenansicht der Quersiegelstation, wobei jedoch die rotierenden Teile der Quersiegelstation zur Erhaltung der Übersichtlichkeit weggelassen sind,

Fig. 3 einen vertikalen Schnitt durch einen Siegelbackenträger entsprechend der Linie III-III in Fig. 1,

Fig. 4 einen Querschnitt durch zusammenwirkende Quersiegelbacken, die sich in der Siegelstellung befinden entsprechend der Linie IV-IV in Fig. 5,

Fig. 5 eine Teildarstellung eines Siegelbackenträgers, in der die Zuführung von Kühlluft zu den Quersiegelbacken dargestellt ist,

Fig. 6 einen Längsschnitt durch eine Kühlluftleiste nach Linie VI-VI in Fig. 5 und

Fig. 7 eine Ansicht auf Führungsbahnen für die Halter von Quersiegelbacken nach Linie VII-VII in Fig. 3.

Die Verpackungsmaschine hat ein Gestell 1, an dem alle Funktionsteile der Maschine befestigt sind. An einem oberen Vorsprung 1a ist eine Dosiereinrichtung 2 befestigt, die zu verpackende Portionen abgibt.

Die Portionen werden in ein Füllrohr 3 abgegeben und fallen in aus einem Schlauch 4 zu formende Beutel. Der Schlauch 4 wird aus einem Hüllstoffband 5 geformt. In einer insgesamt mit 6 bezeichneten Quersiegelstation werden Beutel abgetrennt.

Das Hüllstoffband 5 ist auf einer Bandrolle 7 gespeichert und wird über diverse Umlenkrollen 8, 9, 10 zu einer Form Sch-ulter 11 geführt. An der Formschulter 11 wird das Band 5 zu einem Schlauch geformt, an dem sich die Ränder des Bandes überlappen. Zur Verschweißung der überlappenden Ränder dient eine Längssiegelbacke 12, die vorzugsweise dauernd am Hüllstoff anliegt, also eine Art Schleifer bildet. Zum kontinuierlich erfolgenden Abzug der Hüllstoffbahn längs dem Füllrohr 3 dienen zwei Abzugsriemen 13, die einander diametral gegenüberliegenden an der Hüllstoffbahn anliegen und diese durch Reibung mitnehmen. Die Abzugsriemen 13 werden mittels einer durch eine strichpunktierte Linie 14 symbolisierten Welle angetrieben.

Der bis jetzt beschriebene Aufbau der Verpackungsmaschine ist bekannt. Neu ist die Quersiegelstation 6, die nachfolgend beschrieben wird.

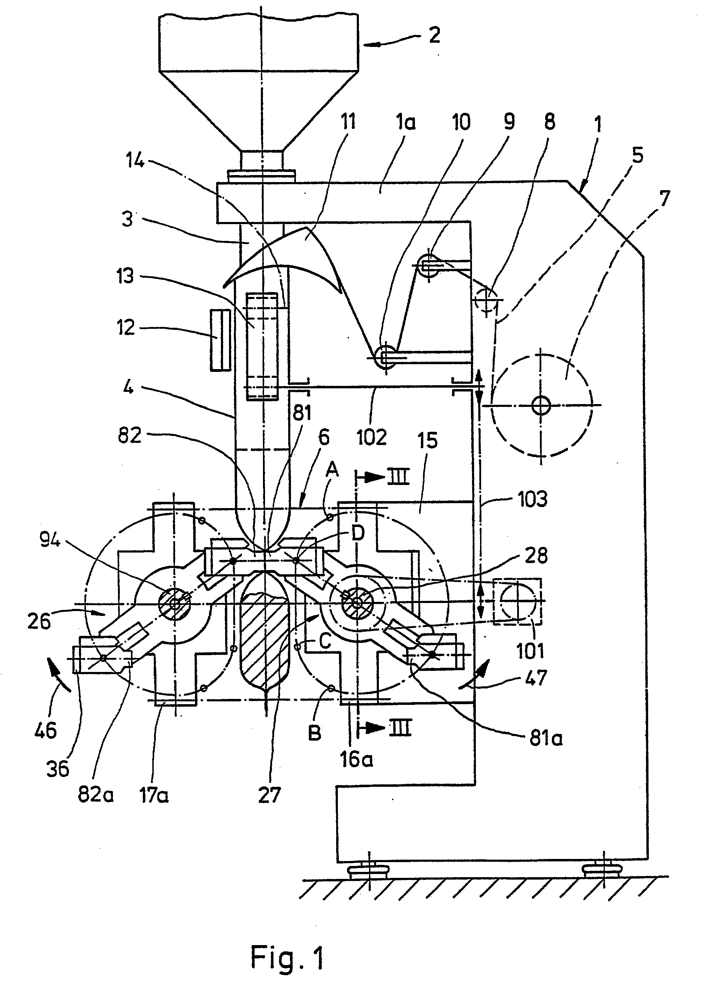

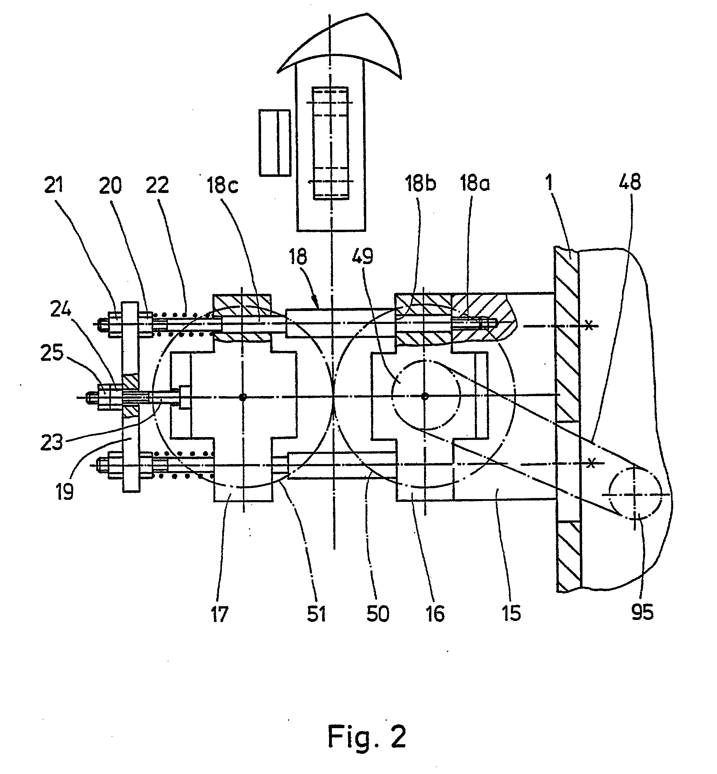

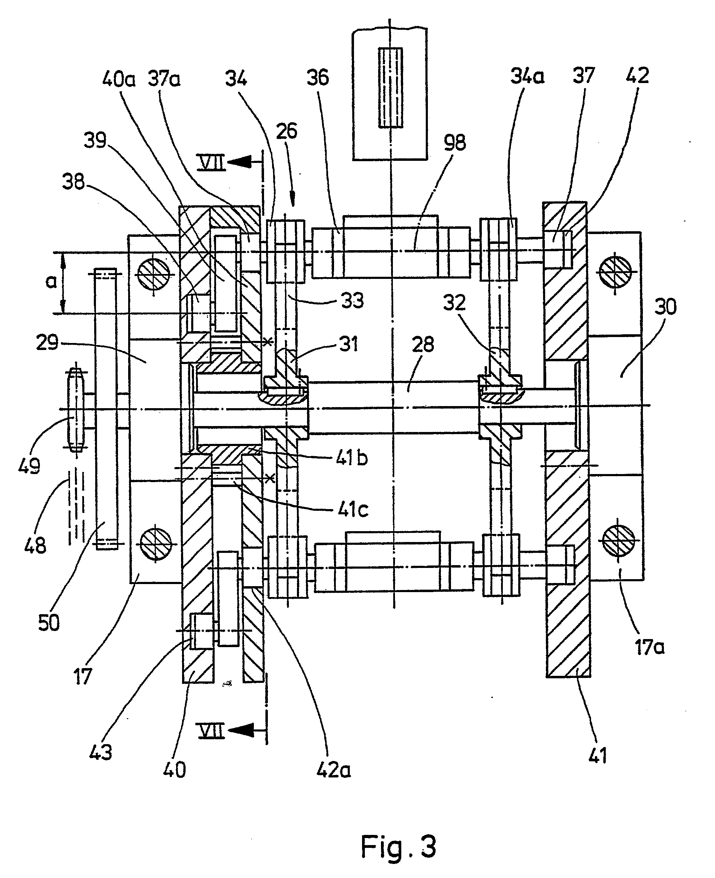

An der Vorderseite des Gestells 1 befinden sich Halteplatten 15, an denen Lagerplatten 16, 17 gehalten sind (siehe dazu auch Fig. 2). Parallel zu jeder Lagerplatte 16, 17 befindet sich eine weitere Lagerplatte 16a, 17a, die in Fig. 1 zu sehen ist. In Fig. 3 sind die ein Paar bildenden Lagerplatten 17, 17a zu sehen. Die Lagerplatten 16, 16a, bilden ein weiteres Paar.

Die Lagerplatten 16, 16a sind starr mit ihrer zugeordneten Halteplatte 15 verschraubt. Hierzu dienen Bolzen 18, die mehrfach abgesetzt sind und die mit einem vorderen Gewindeteil 18a in die Lagerplatte 15 eingeschraubt sind und die Lagerplatte 16 mit einer Schulter 18b gegen die Lagerplatte pressen. Jeder Bolzen 18 hat einen Führungsbereich 18c, auf dem die Lagerplatte 17 (bzw. 17a) verschiebbar ist. Beide Bolzen 18 sind über eine Brücke 19 miteinander verbunden, die mittels Muttern 20, 21 an den Bolzen 18 fixiert sind.

Durch Verschraubung der Muttern, 20, 21 kann die Lage der Brücke 19 verändert werden. Jeder Bolzen 18 ist von einer Schraubendruckfeder 22 umgeben, die die Lagerplatte 17 in Richtung der Lagerplatte 16 zu drücken versucht. Der Bewegungsweg wird durch einen Zugbolzen 23 begrenzt, auf dem eine Einstellmutter 24 und eine Kontermutter 25 verschraubbar sind. Durch die Verstellmöglichkeiten ist sowohl der Druck der Federn 22 veränderbar, als auch die Anschlagstellung.

Die Quersiegelstation hat zwei, insgesamt mit 26 und 27 bezeichnete Siegelbackenträger. Die Siegelbackenträger 26, 27 sind gleich ausgebildet und werden am Beispiel des auch in Fig. 3 dargestellten Siegelbackenträgers 26 beschrieben.

Der Siegelbackenträger 26 hat eine Welle 28, die in Lagern 29, 30 drehbar gelagert ist. Die Lager 29, 30 sind in den Lagerplatten 17, 17a gehalten. Mit der Welle 28 sind Mitnehmer 31, 32 drehfest verbunden. Jeder Mitnehmer 31, 32 hat diametral einander gegenüberliegend Arme. An jedem Arm befindet sich ein Führungsschlitz 33.

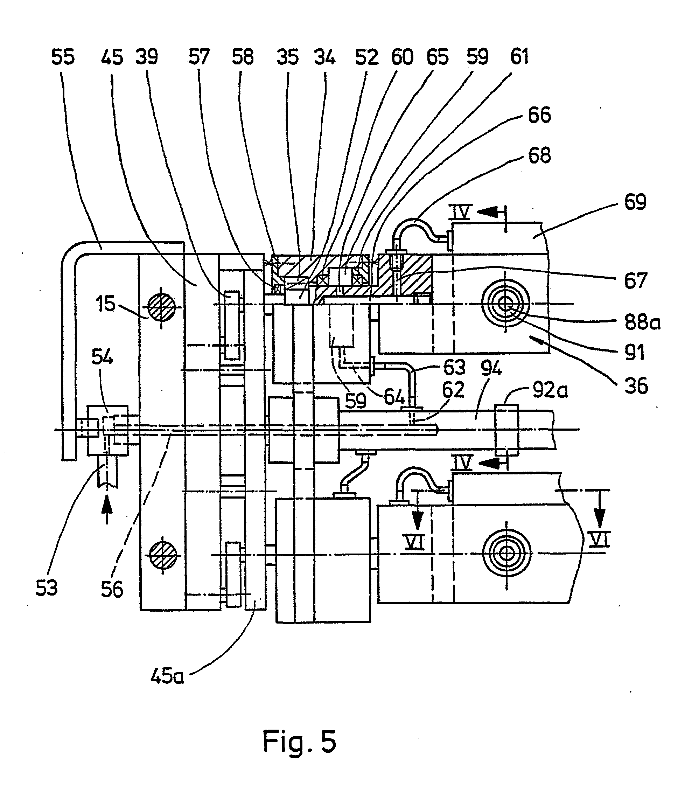

In den Führungsschlitzen 33 sind Gleitstücke 34 derart verschiebbar, daß sich ihr Abstand von der Welle 28 ändern kann. In jedem Gleitstück 34 befindet sich ein Wälzlager 35 (siehe Fig. 5), in dem ein Siegelbackenhalter 36 drehbar gelagert ist.

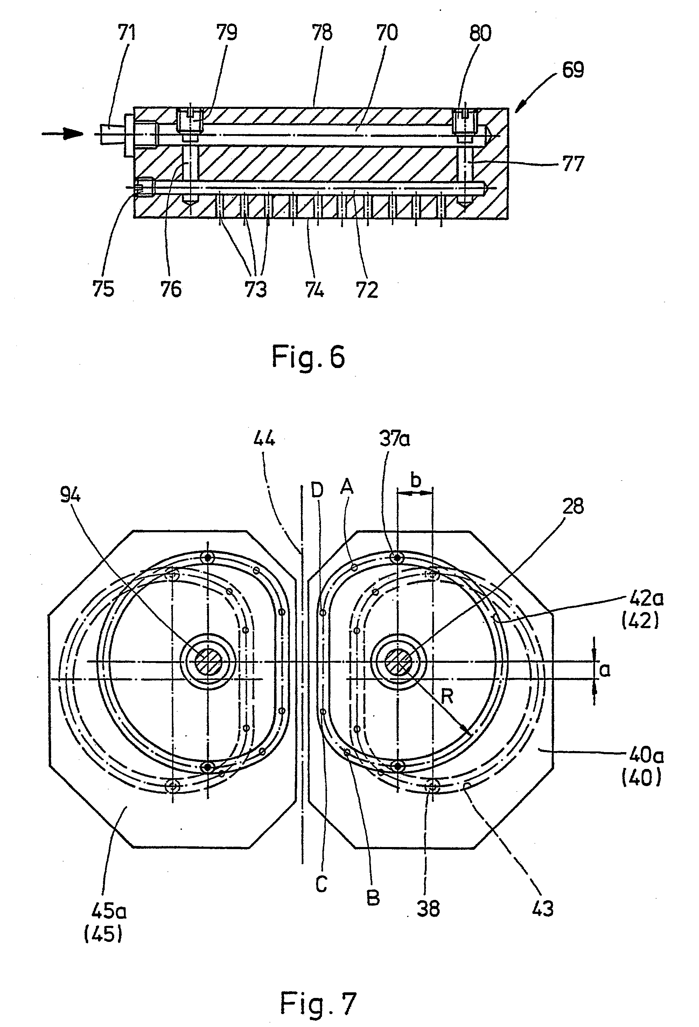

Der Siegelbackenhalter 36 hat zwei Führungsrollen 37 und 38 (siehe Fig. 3). Die Führungsrolle 37 ist konzentrisch zu dem benachbarten Lager innerhalb des Gleitstückes 34 und damit auch konzentrisch zur Schwenkachse 98 des Siegelbackenhalters 36. Die andere Führungsrolle 38 sitzt an einem Kurbelarm 39, der starr mit dem Siegelbackenhalter 36 verbunden ist. Die Achse der Führungsrolle 38 hat einen Abstand von der Achse der Führungsrolle 37, die, wie gesagt, mit der Schwenkachse des Siegelbackenhalters 36 zusammenfällt. Dieser Abstand ist durch die Koordinaten a, b (siehe auch Fig. 7) definiert.

Am Siegelbackenhalter 36 befindet sich eine weitere Führungsrolle 37a, die koaxial zur Führungsrolle 37 ist und damit auch konzentrisch zu dem benachbarten Lager innerhalb des Gleitstückes 34.

Mit der Lagerplatte 17 ist eine Kurvenplatte 40 und mit der Lagerplatte 17a eine weitere Kurvenplatte 41 fest verbunden. In der Kurvenplatte 41 befindet sich eine Führungsnut 42, in die die Führungsrolle 37 passend eingreift.

In der Kurvenplatte 40 befindet sich ebenfalls eine Führungsnut 43, in die die Führungsrolle 38 passend eingreift.

Die Führungsnuten 42, 43 sind in sich geschlossen und haben die gleiche Form, wie dies in Fig. 7 dargestellt ist. Die Führungsnut 43, die hinter der Zeichenebene liegt, ist gegenüber der Führungsnut 42 in vertikaler Richtung parallel verschoben, nämlich um eine Strecke, die gleich dem Abstand zwischen den Achsen der Führungsrollen 37 und 38 ist (siehe dazu auch Fig. 3). Die Parallelverschiebung ist durch die bereits erwähnten Koordinaten a, b definiert. Der Achsabstand zwischen den Führungsrollen 37, 37a und 38 ist also

$$\sqrt{a^2 + b^2}.$$

Konzentrisch zur Führungsnut 42 ist eine weitere Führungsnut 42a vorgesehen, die sich in einer weiteren Kurvenplate 40a befindet und in die die Führungsrollen 37a eingreifen. Die Führungsnuten 42, 42a, haben für die Steuerung der Drehlage der Siegelbackenhalter 36 die gleiche Funktion. Im Prinzip könnte deshalb z. B. die Führungsnut 42a weggelassen werden. Ihr Vorhandensein verbessert jedoch die Stabilität des Bewegungsmechanismus wesentlich und ist insbesondere dann von Nutzen, wenn die Siegelbacken eine große Länge haben.

Die strichpunktierte Linie 44 ist die Quermitte der Verpackungsmaschine. Symmetrisch zu der durch die strichpunktierte Linie 44 definierten Ebene sind spiegelbildlich weitere Kurvenplatten angeordnet, von denen eine Kurvenplatte 45 in Fig. 7 dargestellt ist. In der gleichen Ebene wie die Kurvenplatte 40 liegt eine in der Zeichnung nicht dargestellte Kurvenplatte, die in Fig.7 vor der Zeichenebene liegen würde.

Die Form der Führungsnuten 42, 42a, 43 ist wie folgt. Fig. 3 zeigt, daß die Nuten einen rechteckigen Querschnitt haben. Der Abschnitt A-B (siehe Fig. 7) ist kreisbogenförmig, wobei der mittlere Radius R des Kreisbogens seinen Mittelpunkt auf der Achse der Welle 28 hat. Die Abschnitte B-C und D-A sind gekrümmte Übergangsabschnitte, die beide gleich ausgebildet sein können und von einem Kreisbogen abweichen können. Der Abschnitt C-D ist geradlinig. In diesem Abschnitt bewegen sich die Führungsrollen während des Siegel- und Abschneidvorganges.

Die Siegelbackenträger 26 und 27 werden mit entgegengesetzten Richtungen angetrieben in Richtung der Drehrichtungspfeile 46, 47 (siehe Fig. 1). Zu diesem Zweck wird die Welle 28 (siehe Fig. 3) über eine Antriebskette 48 angetrieben, die in ein Kettenrad 49 eingreift, das drehfest mit der Welle 28 verbunden ist. Mit der Welle 28 ist auch drehfest ein Zahnrad 50 verbunden, das in Fig. 2 durch eine strickpunktierte Linie symbolisiert ist. Dieses Zahnrad 50 kämmt mit einem gleichgroßen Zahnrad 51, das drehfest mit der Welle des anderen Siegelbackenträgers verbunden ist.

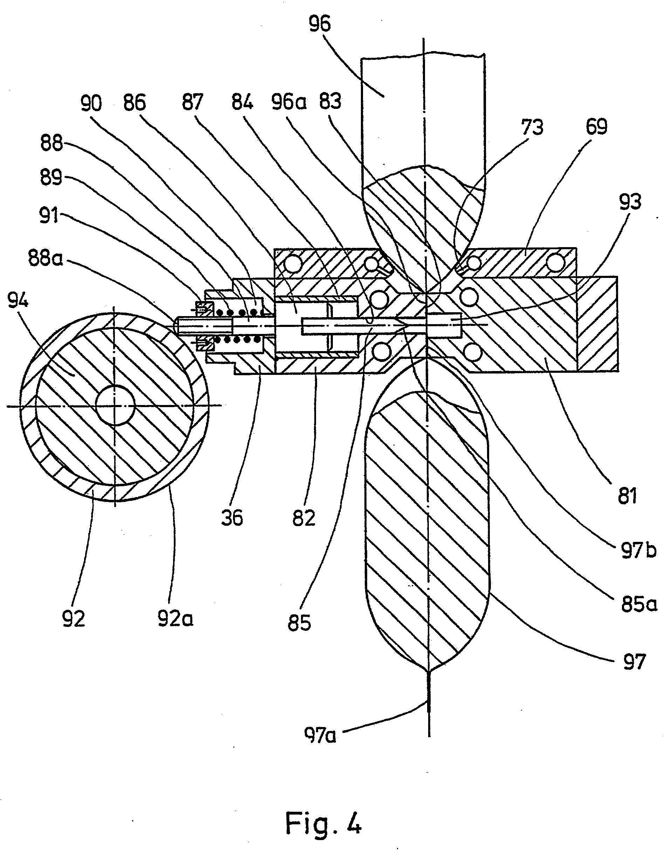

Nachfolgend wird anhand der Fig. 4 bis 6 die Ausbildung der Siegelbackenhalter, der daran befestigten Siegelbacken sowie die Ausbildung von Kühlleisten beschrieben, die mit den Siegelbacken verbunden sind.

Jeder Siegelbackenhalter 36 hat Lagerzapfen 52, an denen sie in den schon erwähnten Wälzlagern 35 gelagert sind. An jedem Ende eines Siegelbackenhalters 36 ist eine solche Lagerung vorgesehen. An dem in Fig. 5 gezeigten Lagerende ist auch die Zuführung von Kühlluft dargestellt.

Die Kühlluft wird über eine Kühlluftleitung 53 zugeführt, die an einen feststehenden Drehverteiler 54 angeschlossen ist. Der Drehverteiler sitzt auf den äußeren Enden der Wellen 28, 94 und wird am Drehen durch einen Bügel 55 gehindert, der an einer Lagerplatte 15 befestigt ist. In jeder Welle 28, 94 befindet sich eine Längsbohrung 56, die über den Drehverteiler 54 mit der Kühlluftleitung 53 kommuniziert. Das Lager 35 ist nach außen mittels einer Wellendichtung 57 abgedichtet, die in einem Deckel 58 sitzt, der mit dem Gleitstück 34 verschraubt ist, in dem der Siegelbackenhalter 36 drehbar gelagert ist.

Im Gleitstück 34 befindet sich eine ringförmige Luftkammer 59, die nach außen mittels Wellendichtungen 60, 61 abgedichtet ist. Die Luftkammer 59 kommuniziert mit der Kühlluftleitung 56 in der Welle 28 über eine Querbohrung 62 in der Welle 94, einen an die Querbohrung 62 angeschlossenen Schlauch 63 und eine im Gleitstück 35 befindliche Bohrung 64.

Die Luftkammer 59 kommuniziert über mindestens eine Bohrung 65 mit einem Hohlraum 66 im Siegelbackenträger 36. Vom Hohlraum 66 geht ein Luftkanal 67 aus, an den ein Schlauch 68 angeschlossen ist, der zu einer Kühlluftleiste 69 führt. Diese Kühlluftleiste 69 ist in Fig. 6 im Schnitt dargestellt.

Die Kühlluftleiste 69 enthält einen Sammelraum 70 in Form einer großvolumigen Bohrung. An diesen Sammelraum ist der genannte Schlauch 68 über eine Schlauchtülle 71 angeschlossen. Parallel zum Sammelraum 70 erstreckt sich eine Verteilerbohrung 72, von der mehrere Düsen 73 ausgehen, die an einer Außenfläche 74 der Kühlluftleiste 69 münden. Die Verteilerbohrung ist nach außen durch eine Verschlußschraube 75 abgeschlossen. Die Verteilerbohrung 72 ist in ihren Endbereichen über Querbohrungen 76, 77 mit dem Sammelraum 70 verbunden. Die Querbohrungen 76, 77 reichen bis zu einer Endfläche 78 der Kühlluftleiste und sind dort mittels Schrauben 79, 80 verschlossen. Die Schrauben 79, 80 bilden zugleich verstellbare Drosselelemente. Je tiefer diese Schrauben eingeschraubt werden, desto kleiner wird der Querschnitt der Strömungsverbindung zwischen dem Sammelraum 70 und den Querbohrungen 76, 77. Dadurch läßt sich die durchströmende Luftmenge bei einem gegebenen Druck einstellen und auch die Verteilung auf die einzelnen Düsen regulieren.

Wie Fig. 6 zeigt, sind die Kühlluftleisten 69 auf die Quersiegelbacken 81 bzw. 82 aufgesetzt. Die Luftdüsen 73 sind so orientiert, daß sie Luft in den Bereich der Siegelnaht 83 lenken.

An den Quersiegelbacken 82 eines Siegelbackenträgers befinden sich Schneidmesser. Im dargestellten Fall sind die Schneidmesser an den Quersiegelbacken 82 des Siegelbackenträgers 26 vorgesehen.

In der Siegelbacke 82 befindet sich ein Führungsschlitz 84, in dem ein Messer 85 gleitbar ist. Das Messer hat eine Schneide 85a. Am Rücken des Messers 85 ist ein kolbenartiges Führungsstück 86 befestigt, das in einer Buchse 87 gleitbar ist, die in die Quersiegelbacke 82 eingelassen ist. Am Führungsstück 86 befindet sich eine Stange 88, die in den Siegelbackenhalter 36 eingreift. Die Stange 88 ist von einer Schraubendruckfeder 89 umgeben, die sich mit einem Ende am Boden einer Ausnehmung 90 abstützt, die sich im Siegelbackenträger 36 befindet, während das andere Ende an einer Mutter 91 abgestützt ist, die auf ein Gewinde der Stange 88 aufgeschraubt ist. Die Feder 89 ist vorgespannt. Ihre Vorspannung läßt sich durch mehr oder weniger weites Aufschrauben der Mutter 91 regulieren.

Das hintere Ende 88a der Stange 88 bildet eine Tastfläche, die mit einer Steuerfläche 92a zusammenwirkt, z. B. der zylindrischen Außenfläche eines Ringes 92, der auf die Welle 94 aufgesetzt ist.

In der gegenüberliegenden Quersiegelbacke 81 befindet sich eine Ausnehmung 93, in die das Messer 85 während eines Schneidvorganges eintauchen kann. Aus Fig. 4 ist ohne weiteres ersichtlich, daß bei einer vertikalen Abwärtsbewegung der Quersiegelbacken 81, 82 das Führungstück 86 unter Überwindung der Vorspannkraft der Feder 89 nach links gedrückt wird, wobei das Stangenende 88a auf der Fläche 92a entlanggleitet. Die Feder 89 hält den Kontakt mit der Fläche 92 aufrecht und bewirkt auch das Zurückdrücken des Messers 85 in die gezeichnete Ruhestellung, wenn die Steuerfläche 92a passiert ist. Um ein Verkanten eines breiten Messers zu vermeiden, können zwei Stößel 86, 88 vorgesehen werden.

Die Verpackungsmaschine arbeitet wie folgt. Es sei der einfache Fall angenommen, daß sowohl die Abzugsgeschwindigkeit des Hüllstoffschlauches 4 als auch die Winkelgeschwindigkeit der Wellen 28 und 94 konstant seien. Diese Geschwindigkeiten stehen in einem bestimmten Verhältnis zueinander, die der gewünschten Beutellänge entspricht. Wenn lange Beutel hergestellt werden sollen, ist die Abzugsgeschwindigkeit für den Folienschlauch 4 relativ hoch. Falls kürzere Beutel hergestellt werden sollen, ist die Abzugsgeschwindigkeit im Verhältnis zur Winkelgeschwindigkeit der Wellen 28, 94 relativ kleiner. Das Verhältnis kann beliebig geändert werden. Zu diesem Zweck besteht eine getriebemäßige Verbindung zwischen den Antriebswellen 14 für die Abzugsriemen und demjenigen Kettenrad 95, von dem aus über die Kette 48 die beiden Siegelbackenhalter 26, 27 gegenläufig angetrieben werden.

Durch den Eingriff jedes Siegelbackenhalters 36 in zwei parallel zueinander versetzte Führungsnuten 42, 43 wird erreicht, daß die Siegelbackenhalter auf ihrem gesamten Umlauf eine horizontale Lage beibehalten. Zwei Quersiegelbacken 81, 82 nähern sich schräg von oben dem Folienschlauch und sind mit diesem nach dem Durchlaufen der Übergangsbereiche A-D in der in den Fig. 1 und 4 dargestellten Lage, in der die Quersiegelbacken 81, 82 die beiden zu verschweißenden Hüllstofflagen gegeneinander pressen und durch Wärmeeinwirkung miteinander versiegeln. Hierdurch wird ein noch zu füllender oberer Beutel 96 mit einer Bodennaht 96a versehen, während ein unterer bereits gefüllter Beutel 97 mit einer Kopfnaht 97b versehen wird. Die Bodennaht 97a wurde schon bei einem vorhergehenden Arbeitszyklus gebildet. Unmittelbar nach dem Festklemmen der Hüllstofflagen durch die Quersiegelbacken 81, 82 kann Füllgut eingegeben werden.

Im Verlaufe der Abwärtsbewegung der Quersiegelbacken 81, 82 erfolgt die Abtrennung des unteren Beutels 97 mittels des Messers 85, das durch Auflaufen auf die Steuerfläche 92a nach links bewegt wird. Die Durchtrennung kann schon im Anfangsbereich der Abwärtsbewegung der Quersiegelbacken 81, 82 erfolgen, da der untere Beutel 97 auch nach der Durchtrennung infolge seiner Festklemmung durch die Quersiegelbacken 81, 92 nicht abfallen kann.

Die Quersiegel- und Abschneidstation ist durchlaufen, wenn die Führungsrollen 37 am Punkt C angelangt sind. Die Quersiegelbacken laufen nun auseinander, wodurch der untere Beutel 97 freigegeben wird und nach unten fällt.

Nachdem sich die Quersiegelbacken 81, 82 von der Naht wegbewegt haben ist der nachfolgende Beutel bereits gefüllt und die diametral gegenüberliegenden Quersiegelbacken 81a, 82a haben sich dem Folienschlauch 4 bereits weitgehend an genähert. Sie kommen schon bald nachdem sich die Quersiegelbacken 81a, 82a gelöst haben mit dem Folienschlauch in Berührung wonach der beschriebene Zyklus erneut abläuft.

Aus Fig. 7 ist am leichtesten zu erkennen, daß zwischen den Punkten D und C bei konstanter Winkelgeschwindigkeit der Wellen 28, 94 sich die Abwärtsgeschwindigkeit der Quersiegelbacken zunächst verringert, da der Abstand vom Drehzentrum zunächst abnimmt und danach wieder erhöht wegen Zunahme des Abstandes vom Drehzentrum. Diese Geschwindigkeitsschwankung kann jedoch in der Regel toleriert werden, da die Füllung des Beutels diesen ausbeult, so daß Stauchungen im Folienschlauch nicht entstehen. Es ist jedoch möglich, die Bewegungsgeschwindigkeit der Quersiegelbacken genau an die Abzugsgeschwindigkeit des Folienschlauches 4 anzupassen. Hierfür gibt es drei Möglichkeiten. Die erste Möglichkeit besteht darin, daß die Winkelgeschwindigkeit der Wellen 28, 94 zwischen den Bahnpunkten D und C zunächst vergrößert und dann wieder verringert wird. Die zweite Möglichkeit besteht darin, daß durch Änderung der Winkelgeschwindigkeit der Antriebswellen 14 der Abzugsriemen 13 die Abzugsgeschwindigkeit zunächst verlangsamt und dann wider erhöht wird. Die dritte Möglichkeit besteht darin, daß sowohl die Winkelgeschwindigkeit der Wellen 28, 94 innerhalb der Quersiegelzone verändert wird als auch die Abzugsgeschwindigkeit des Folienschlauches 4. Solche Abstimmungen können mit konventionellen Mitteln erfolgen, wobei dem Fachmann hierfür sowohl rein mechanische als auch elektronische Lösungen zur Verfügung stehen.

Die Übergangsbereiche A-D und C-B der Steuernuten 42, 43 können im Hinblick auf möglichst geringe Beschleunigungen optimiert werden, wodurch die Massenkräfte niedrig gehalten werden.

Für eine Veränderung der Beutellänge ist es erforderlich, die Umfangsgeschwindigkeit der Abzugsriemen 13 im Verhältnis zur Drehgeschwindigkeit der Siegelbackenträger 26, 27 zu ändern. Zu diesem Zweck ist zwischen dem Antrieb 101 für die Siegelbackenträger 26, 27 und einer Antriebswelle 102 für die Abzugsriemen 13 eine Getriebeverbindung 103 vorgesehen, die in der Zeichnung nur symbolisch durch eine strichpunktierte Linie angedeutet ist. Die Getriebeverbindung 103 gestattet die Veränderung des Drehzahlverhältnisses zwischen den Siegelbackenträgern 26, 27 und der Welle 102. Anstelle einer mechanischen Getriebeverbindung kann auch eine elektrische Welle vorgesehen sein, z.B. auch eine solche mit Schrittmotor. Außer diesen Möglichkeiten kann jede bekannte Methode verwendet werden, mit der das Drehzahlverhältnis zwischen zwei Wellen geändert werden kann. Gleichzeitig mit der genannten Veränderung des Drehzahlverhältnisses kann der Antrieb 101 so verstellt werden, daß die Winkelgeschwindigkeit der Siegelbackenträger ungleichförmig wird, um so zu erreichen, daß die Bewegungsgeschwindigkeit der Siegelbacken 81, 82 im Bereich D-C (siehe Fig. 7) der Bewegungsgeschwindigkeit des Folienschlauches angeglichen wird.

## Patentansprüche

1. Verpackungsmaschine zum Herstellen von Beuteln aus einem Hüllstoffband aus heißversiegelbarem Material und zum Füllen sowie Verschließen der Beutel, mit einem vorzugsweise vertikal verlaufenden Füllrohr (3), das von einer Formschulter umgeben ist, an der das kontinuierlich abziebare Hüllstoffband zu einem Schlauch formbar ist, mit einem Längssiegelorgan (12) zur Verbindung der sich überlappenden Ränder der Hüllstoffbahn und einer Quersiegelstation (6), die hinter dem Ausgangsende des Füllrohres angeordnet ist und Quersiegelbacken (81, 82) aufweist, welche an zwei um parallele Achsen synchron und gegenläufig drehbaren Siegelbackenträgern (26, 27) angeordnet sind, wobei jede Siegelbacke von einem relativ zum zugeordneten Siegelbackenträger schwenkbaren Backenhalter (36) gehalten ist, und wobei die Bewegungsgeschwindigkeit der Siegelbacken während ihres Kontakts mit dem Folienschlauch höchstens gleich der Geschwindigkeit des Hüllstoffbandes ist, dadurch gekennzeichnet, daß zum Abzug des Hüllstoffbandes (5) ständig umlaufende Hüllstofförderer (13) in Form von Abzugsrollen oder Abzugsbändern vorgesehen sind, die im Bereich unterhalb der Formschulter (11) mit Reibschluß am Hüllstoff (5) anliegen, und daß das Verhältnis zwischen der Umfangsgeschwindigkeit der Hüllstofförderer (13) und der Siegelbackenträger (26, 27) einstellbar ist.

2. Verpackungsmaschine nach Anspruch 1, dadurch gekennzeichnet, daß die genannten Achsen (28, 94) ortsfest angeordnet sind, daß die Siegelbackenhalter (36) in den Siegelbackenträgern (26, 27) radial verschiebbar sind und daß jeder Siegelbackenhalter (36) zwei Führungselemente (37, 38) aufweist, von denen jedes an einer Führungsbahn eines Führungsbahnen-Paares (42, 43) geführt ist, wobei die Führungsbahnen in sich geschlossen sind und beide Führungsbahnen (42, 43) die gleiche Form haben, jedoch parallel zueinander verschoben sind und die Quersiegelbacken (81, 81a, 82, 82a) mindestens im Bereich der Siegelzone (D-C), in der die Quersiegelbacken (81, 81a, 82, 82a) geradlinig in Abzugsrichtung des Hüllstoffschlauches (4) verlaufen, rechtwinklig zum Hüllstoffschlauch (4) orientiert sind.

3. Verpackungsmaschine nach Anspruch 2, gekennzeichnet durch eine dritte Führungsbahn (42a), die zu einer (42) der genannten Führungsbahnen (42, 43) konzentrisch ist, wobei an jeder Seite der Siegelbackenhalter (36) eine der zueinander konzentrischen Führungsbahnen (42, 42a) angeordnet ist.

4. Verpackungsmaschine nach einem der Ansprüche 2 und 3, dadurch gekennzeichnet, daß jeder Siegelbackenträger (26, 27) eine Welle (28, 94) aufweist, mit der zwei Führungsteile (31, 32) drehfest verbunden sind, zwischen denen sich die Siegelbackenhalter (36) erstrecken.

5. Verpackungsmaschine nach einem der Ansprüche 2 bis 4, dadurch gekennzeichnet, daß die Backenhalter (36) mit Lagerzapfen (52) in Gleitstücke (34) eingreifen, die in den Siegelbackenhaltern (26, 27) verschiebbar sind.

6. Verpackungsmaschine nach einem der Ansprüche 2 bis 5, dadurch gekennzeichnet, daß die Führungsbahnen (42, 42a, 43) als Nuten ausgebildet sind, in die die vorzugsweise als Rollen ausgebildeten Führungselemente (37, 37a, 38) passend eingreifen.

7. Verpackungsmaschine nach einem der Ansprüche 2 bis 6, dadurch gekennzeichnet, daß eine Führungsbahn eines Führungsbahnen-Paares (42, 42a, 43) auf einer Seite und die andere Führungsbahn auf der anderen Seite des zugeordneten Siegelbackenträgers (26, 27) angeordnet ist.

8. Verpackungsmaschine nach einem der Ansprüche 2 bis 7, dadurch gekennzeichnet, daß ein Führungselement (37) zur Schwenkachse (98) des zugeordneten Backenhalters (36) konzentrisch ist und das andere Führungselement (38) an einem von der Schwenkachse (98) abstrebenden Kurbelarm (39) angeordnet ist.

9. Verpackungsmaschine nach Anspruch 8, dadurch gekennzeichnet, daß im Falle von zwei zueinander konzentrischen Führungsbahnen (42, 42a) nach Anspruch 2 in diese Führungselemente (34, 37a) eingreifen, die zur Schwenkachse des zugeordneten Backenhalters (36) konzentrisch sind.

10. Verpackungsmaschine nach einem der Ansprüche 2 bis 9, dadurch gekennzeichnet, daß an jedem Siegelbackenträger (26, 27) diametral zueinander zwei Quersiegelbacken (81, 81a bzw. 82, 82a) angeordnet sind.

11. Verpackungsmaschine nach einem der Ansprüche 2 bis 10, dadurch gekennzeichnet, daß jede Führungsbahn (42, 42a, 43) einen kreisförmigen Abschnitt (A-B) hat, der sich vorzugsweise über mindestens 180° erstreckt, wobei im Falle des Anspruches 7 der kreisförmige Abschnitt (A-B) einer Führungsbahn eines Führungsbahnen-Paares (42, 43) konzentrisch zur Drehachse (28, 94) des zugeordneten Siegelbackenträgers (26, 27) ist und daß an den kreisförmigen Abschnitt (A-B) gekrümmte Übergangsabschnitte (A-D, B-C) anschließen, die in einen geraden Abschnitt (D-C) übergehen, die sich parallel zur Abzugsrichtung des Hüllstoffschlauches (5) erstrekken.

12. Verpackungsmaschine nach einem der vorhergehenden Ansprüche, dadurch gekennzeichnet, daß die Siegelbackenträger (26, 27) relativ zueinander derart federnd nachgiebig sind, daß sie unter Überwindung einer Vorspannung auseinanderdrückbar sind.

13. Verpackungsmaschine nach Anspruch 12, dadurch gekennzeichnet, daß ein Siegelbackenträger (27) ortsfest und der andere (26) gleitbar angeordnet ist und mittels Federn (22) in Richtung des anderen Siegelbackenträgers (27) gedrückt ist, wobei der Bewegungsweg des beweglichen Siegelbackenträgers (26) durch einen Anschlag (24) begrenzt ist, der vorzugsweise verstellbar ist.

14. Verpackungsmaschine nach einem der vorhergehenden Ansprüche, dadurch gekennzeichnet, daß in den Quersiegelbakken (82, 82a) eines Siegelbackenträgers ein Messer (85) zum Abschneiden gefüllter und verschlossener Beutel (97) vorgesehen ist, wobei zur Betätigung des Messern (85) mindestens ein auf dieses einwirkender Stößel (86, 88) mit einer Betätigungsfläche zusammenwirkt, vorzugsweise einer konvexen Fläche, vorzugsweise einer zylindrischen Fläche (92a), die sich auf einer Welle (28) oder Achse des Siegelbackenträgers gefindet.

15. Verpackungsmaschine nach Anspruch 14, dadurch gekennzeichnet, daß dem Stößel eine Rückdrückfeder (98) zugeordnet ist, deren Spannung vorzugsweise einstellbar ist.

16. Verpackungsmaschine nach einem der vorhergehenden Ansprüche, dadurch gekennzeichnet, daß an mindestens einer, vorzugsweise an beiden Quersiegelbacken von zusammenwirkenden Paaren (81/82 bzw. 81a/82a) Luftdüsen (73) für Kühlluft zur Abkühlung der Quersiegelnaht (96a, 97b) vorgesehen sind.

17. Verpackungsmaschine nach Anspruch 16, dadurch gekennzeichnet, daß die Welle (28, 94) mindestens eines Siegelbackenträgers (26, 27) einen Kühlluftkanal (56) enthält, der über eine flexible Leitung (63) mit einem Ringkanal (59) kommuniziert, der sich in einem Gleitstück (34) befindet und daß der Ringkanal (59) über mindestens eine Querbohrung (65) mit dem Hohlraum eines Siegelbackenhalters (36) kom muniziert, welcher Hohlraum (66) seinerseits über eine Leitung (68) mit einem Hohlraum (70) verbunden ist, von dem die Luftdüsen (73) ausgehen.

18. Verpackungsmaschine nach einem der Ansprüche 16 und 17, dadurch gekennzeichnet, daß sich an belüfteten Quersiegelbacken (81, 81a, 82, 82a) ein Luftverteiler befindet, der einen großvolumigen Luftsammelraum (70) enthält, von dem Querbohrungen (76, 77) ausgehen, die zu einem Verteilerkanal (72) führen, von dem die Luftdüsen (73) ausgehen, wobei die Querbohrungen (76, 77) bis zur Außenseite (78) des Luftverteilers (69) reichen und in denen Verschlußstopfen (79, 80) verschraubbar sind, mit denen der Strömungsquerschnitt zwischen dem Luftsammelraum (70) und den Querbohrungen (76, 77) einstellbar ist.

19. Verpackungsmaschine nach einem der vorhergehenden Ansprüche, dadurch gekennzeichnet, daß das Verhältnis zwischen der Abzugsgeschwindigkeit des Hüllstoffschlauches (4) und der Winkelgeschwindigkeit der Siegelbackenträger (26, 27) während eines Umlaufes der Siegelbackenträger (26, 27) veränderlich ist zur Herstellung einer gleichschnellen Bewegung von Hüllstoffschlauch (4) und Quersiegelbacken (81, 82, 81a, 82a) im Bereich der Siegelzone (D-C).

20. Verpackungsmaschine nach Anspruch 19, dadurch gekennzeichnet, daß die Abzugsgeschwindigkeit des Hüllstoffschlauches (4) konstant und die Winkelgeschwindigkeit der Siegelbackenträger (26, 27) veränderlich ist.

21. Verpackungsmaschine nach Anspruch 20, dadurch gekennzeichnet, daß die Winkelgeschwindigkeit der Schlauchbeutelträger (26, 27) etwa bis zur Mitte der Siegelzone (D–C) zunimmt und danach wieder abnimmt.

22. Verfahren zum Betrieb einer Verpackungsmaschine nach.

**Revendications**

1. Machine d'emballage pour fabriquer des sachets à partir d'une bande de matière d'enveloppe scellable à chaud, et pour remplir et fermer ces sachets, comprenant un conduit de remplissage (3) dirigé de préférence verticalement, qui est entouré par un épaulement de formage, sur lequel la bande de matière d'enveloppe peut être tirée de façon continue pour former un tube, un organe (12) de scellement longitudinal pour lier les bords à recouvrement de la bande de matière d'enveloppe, et une station (6) de scellement transversal, qui est disposée derrière l'extrémité de sortie du tube de remplissage et comporte des mâchoires (81, 82) de scellement transversal, qui sont disposées sur deux supports (26, 27), pouvant tourner de façon synchrone et en sens inverse autour d'axes parallèles, chaque mâchoire de scellement étant maintenue par un appui (36) de mâchoire capable de pivoter relativement au support de mâchoire de scellement correspondant, et la vitesse de déplacement des mâchoires de scellement pendant leur contact avec le tube fait à partir de feuilles étant au plus égale à la vitesse de la bande de matière d'enveloppe, caractérisée en ce que, pour tirer la bande (5) de matière d'enveloppe, des entraîneurs (13) de matière d'enveloppe sont prévus sous la forme de rouleaux ou de bandes de tirage, qui sont appliqués à friction sur la matière d'enveloppe (5) dans la région située en-dessous de l'épaulement de formage, et en ce que le rapport entre les vitesses périphériques des entraîneurs (13) et des supports (26, 27) de mâchoire de fermeture est réglable.

2. Machine d'emballage selon la revendication 1, caractérisée en ce que lesdits axes (28, 94) sont disposés fixes à leur emplacement, en ce que les appuis de mâchoire de scellement (36) sont montés avec possibilité de coulissement radial dans les supports (26, 27) de mâchoire de scellement, et en ce que chaque appui de mâchoire de scellement (36) deux éléments de guidage (37, 38), dont chacun est guidé sur l'une des voies d'une paire (42, 43) de voies de guidage, les voies de guidage étant fermées sur elles-mêmes et les deux voies de guidage (42, 43) ayant la même forme, mais étant décalées l'une par rapport à l'autre, et les mâchoires de scellement transversal (81, 81a, 82, 82a) étant orientées à angle droit par rapport au tube de matière d'enveloppe, au moins dans la zone de scellement (D–C), dans laquelle les mâchoires de scellement transversal se déplacent en ligne droite dans la direction de tirage du tube (4) de matière d'enveloppe.

3. Machine d'emballage selon la revendication 2, caractérisée par une troisième voie de guidage (42a) qui est concentrique à l'une desdites voies de guidage (42, 43), une des voies de guidage (42, 42a) concentriques entre elles étant disposée de part et d'autre de l'appui de mâchoire de scellement (36).

4. Machine d'emballage selon l'une des revendications 2 et 3, caractérisée en ce que chaque support de mâchoire de scellement (26, 27) comporte un arbre (28, 94) par lequel sont reliées, sans rotation possible, deux parties de guidage (31, 32) entre lesquelles s'étendent les appuis (36) de mâchoire de scellement.

5. Machine d'emballage selon l'une des revendications 2 à 4, caractérisée en ce que les appuis de mâchoires (36) engrènent avec des tourillons (52) dans des coulisseaux (34) qui peuvent coulisser dans les supports de mâchoire de scellement (26, 27).

6. Machine d'emballage selon l'une des revendications 2 à 5, caractérisée en ce que les voies de guidage (42, 42a, 43) sont constituées sous forme de rainures dans lesquelles les éléments de guidage (37, 37a, 38), constitués de préférence sous forme de rouleaux, engrènent de façon adaptée.

7. Machine d'emballage selon l'une des revendications 2 à 6, caractérisée en ce qu'une voie de guidage d'une paire de voies de guidage (42, 42a, 43) est disposée d'un côté du support de mâchoire de scellement correspondant (26, 27), et l'autre voie de guidage, de l'autre côté.

8. Machine d'emballage selon l'une des revendications 2 à 7, caractérisée en ce qu'un élément de guidage (37) est concentrique à l'axe de pivotement (98) de l'appui de mâchoire (36) correspondant, et l'autre élément de guidage (38) est disposé sur un bras de manivelle (39) s'arcboutant sur l'axe de pivotement (98).

9. Machine d'emballage selon la revendication 8, caractérisée en ce que dans le cas de deux voies de guidage (42, 42a) concentriques l'une par rapport à l'autre selon la revendication 2, des éléments de guidage (34, 37a) engrènent dans celles-ci, lesdits éléments étant concentriques à l'axe de pivotement de l'appui de mâchoire (36) correspondant.

10. Machine d'emballage selon l'une des revendications 2 à 9, caractérisée en ce que deux mâchoires de scellement transversal (81, 81a ou 82, 82a) sont disposées diamétralement l'une par rapport à l'autre sur chaque support de mâchoire de scellement (26, 27).

11. Machine d'emballage selon l'une des revendications 2 à 10, caractérisée en ce que chaque voie de guidage (42, 42a, 43) comprend une portion (A–B) de forme circulaire s'étendant de préférence sur au moins 180°, avec, dans le cas de la revendication 7, la portion (A–B) de forme circulaire d'une voie de guidage appartenant à une paire de voies de guidage (42, 43) qui est concentrique à l'axe de rotation (28, 94) du support de mâchoire de scellement (26, 27) correspondant, et en ce que des portions de transition incurvées (A–D, B–C) se raccordent à la portion (A–B) de forme circulaire et se transforment en une portion droite (D–C), ces portions droites s'étendant parallèlement à la direction de tirage du tuyau (5) de matière d'enveloppe.

12. Machine d'emballage selon l'une des revendications précédentes, caractérisée en ce que les supports de mâchoire de scellement (26, 27) sont montés élastiquement l'un par rapport à l'autre, de sorte qu'on peut les écarter l'un de l'autre en surmontant une contrainte.

13. Machine d'emballage selon la revendication 12, caractérisée en ce qu'un support de mâchoire de scellement (27) est fixé à son emplacement et que l'autre (26) est disposé de façon coulissante et poussé par des ressorts (22) dans la direction du premier, le trajet de déplacement du support de mâchoire de scellement (26) mobile étant limité par une butée (24), laquelle est de préférence réglable.

14. Machine d'emballage selon l'une des revendications précédentes, caractérisée en ce qu'il est prévu, dans les mâchoires de scellement transversal (82, 82a) d'un support de mâchoire de scellement, un couteau (85) pour couper des sacs remplis et fermés (97), au moins un poussoir (86, 88), qui agit sur ce couteau (85) pour l'actionner, coopérant avec une surface d'actionnement, de préférence convexe et de préférence cylindrique (92a), qui se trouve sur un arbre (28) ou axe du support de mâchoire de scellement.

15. Machine d'emballage selon la revendication 14, caractérisée en ce qu'un ressort de rappel (98), dont la force est de préférence réglable, est adjoint au poussoir.

16. Machine d'emballage selon l'une des revendications précédentes, caractérisée en ce que des buses d'air (73) pour l'air de refroidissement sur la couture de scellement transversal (96a, 97b) sont prévues sur au moins l'une des deux mâchoires de scellement transversal de paires coopérantes et de préférence sur les deux (81/82 ou 81a/82a).

17. Machine d'emballage selon la revendication 16, caractérisée en ce que l'arbre (28, 94) contient un canal (56) d'air de refroidissement, qui communique par l'intermédiaire d'une canalisation flexible (63) avec un canal annulaire (59), lequel se trouve dans un coulisseau (34), et en ce que le canal annulaire (59) communique, par l'intermédiaire d'au moins un perçage transversal (65), avec la cavité libre d'un appui (36) de mâchoire de scellement, ladite cavité (66) étant reliée de son côté, par l'intermédiaire d'une canalisation (68), à une cavité libre (70) d'où partent les buses d'air (73).

18. Machine d'emballage selon l'une des revendications 16 et 17, caractérisée en ce qu'il y a, sur les mâchoire de scellement transversal ventilées (81, 81a, 82, 82a), un distributeur d'air qui contient une chambre collectrice d'air de grand volume (70), d'où partent des perçages transversaux (76, 77) conduisant à un canal distributeur d'où partent les buses d'air (73), les perçages transversaux (76, 77) allant jusqu'au côté extérieur (78) du distributeur d'air (69), dans lesquels on peut visser des bouchons de fermeture (79, 80), grâce auxquels la section transversale d'écoulement entre la chambre collectrice d'air (79) et les perçages (76, 77) est réglable.

19. Machine d'emballage selon l'une des revendications précédentes, caractérisée en ce que le rapport entre la vitesse de tirage du tube de matière d'enveloppe (4) et la vitesse angulaire des supports (26, 27) de mâchoire de scellement pendant un déplacement des supports de mâchoire de scellement (26, 27) est variable pour obtenir un mouvement uniforme du tube de matière d'enveloppe (4) et des mâchoires de scellement transversal (81, 82, 81a, 82a) dans le domaine de la zone de scellement (D–C).

20. Machine d'emballage selon la revendication 19, caractérisée en ce que la vitesse de tirage du tube de matière d'enveloppe (4) est constante et la vitesse angulaire des supports de mâchoire de scellement (26, 27) est variable.

21. Machine d'emballage selon la revendication 20, caractérisée en ce que la vitesse angulaire des supports de mâchoire de scellement (26, 27) augmente à peu près jusqu'au milieu de la zone de scellement (D–C), puis diminue à nouveau.

# Claims

1. Packaging machine for producing bags from a band of wrapping material of heat-sealable material and for filling and closing the bags, having a preferably vertically extending filling tube (3) surrounded by a moulding shoulder on which the band of wrapping material which can be drawn off continuously can be moulded to a flexible tube, having a longitudinal sealing element (12) for connecting the overlapping edges of the web of wrapping material and a transverse sealing station (6) which is arranged behind the output end of the filling tube and has transverse sealing jaws (81, 82), which are arranged on two sealing jaw carriers (26, 27) which can be rotated in opposite directions synchronously about parallel axes, each sealing jaw being held by a jaw holder (36) which can be pivoted relative to the associated sealing jaw carrier, and the speed of motion of the sealing jaws during their contact with the film tube being at most equal to the speed of the band of wrapping material, characterised in that, for drawing off the band (5) of wrapping material, continuously rotating wrapping material conveyors (13) are provided in the form of draw-off rollers or draw-off belts which lie against the wrapping material (5) in the region below the moulding shoulder (11) with frictional engagement, and in that the ratio between the peripheral speed of the wrapping material conveyors (13) and the sealing jaw carriers (26, 27) is adjustable.

2. Packaging machine according to Claim 1, characterised in that the said axes (28, 94) are arranged to be stationary, in that the sealing jaw holders (36) can be displaced radially in the sealing jaw carriers (26, 27), and in that each sealing jaw holder (36) has two guide elements (37, 38) whereof each is guided along a guide path of a pair (42, 43) of guide paths, the guide paths being closed and both guide paths (42, 43) having the same shape but being displaced parallel to one another and the transverse sealing jaws (81, 81a, 82, 82a) being oriented at right angles to the tube (4) of wrapping material at least in the region of the sealing zone (D–C), in which the transverse sealing jaws (81, 81a, 82, 82a) extend in a straight line in the drawing off direction of the tube (4) of wrapping material.

3. Packaging machine according to Claim 2, characterised by a third guide path (42a) which is concentric to one (42) of the said guide paths (42, 43), one of the mutually concentric guide paths (42, 42a) being arranged on each side of the sealing jaw holders (36).

4. Packaging machine according to one of Claims 2 and 3, characterised in that each sealing jaw carrier (26, 27) has a shaft (28, 94) to which two rotationally fast guide parts (31, 32) are connected, between which the sealing jaw holders (36) extend.

5. Packaging machine according to one of Claims 2 to 4, characterised in that the jaw holders (36) engage with journals (52) in slide parts (34) which can be displaced in the sealing jaw holders (26, 27).

6. Packaging machine according to one of Claims 2 to 5, characterised in that the guide paths (42, 42a, 43) are constructed as grooves in which the guide elements (37, 37a, 38), preferably constructed as rollers, are in fitting engagement.

7. Packaging machine according to one of Claims 2 to 6, characterised in that one guide path of a guide pair (42, 42a, 43) is arranged on one side and the other guide path is arranged on the other side of the associated sealing jaw carrier (26, 27).

8. Packaging machine according to one of Claims 2 to 7, characterised in that one guide element (37) is concentric to the pivot axis (98) of the associated jaw holder (36) and the other guide element (38) is arranged on a crank (39) extending braced from the pivot axis (98).

9. Packaging machine according to Claim 8, characterised in that, in the case of two mutually concentric guide paths (42, 42a) in accordance with Claim 2, guide elements (34, 37a) engage in these and are concentric to the pivot axis of the associated jaw holder (36).

10. Packaging machine according to one of Claims 2 to 9, characterised in that there are arranged on each sealing jaw carrier (26, 27) two diametrically opposed transverse sealing jaws (81, 81a, or 82, 82a).

11. Packaging machine according to one of Claims 2 to 10, characterised in that each guide path (42, 42a, 43) has an arcuate section (A–B) which preferably extends over at least 180°, in the case of Claim 7 the arcuate section (A–B) of a guide path of a guide path pair (42, 43) being concentric to the axis (28, 94) of rotation of the associated sealing jaw carrier (26, 27), and in that there are connected to the arcuate section (A–B) curved transition sections (A–D, B–C) which merge with a straight section (D–C) which extend parallel to the draw-off direction of the wrapping material tube (5).

12. Packaging machine according to one of the preceding claims, characterised in that the sealing jaw carriers (26, 27) are resilient relative to one another such that they can be pushed apart, overcoming a pre-tension.

13. Packaging machine according to Claim 12, characterised in that one sealing jaw carrier (27) is arranged stationary and the other (26) is arranged to be slidable and is pushed by means of springs (22) in the direction of the other sealing jaw carrier (27), the path of motion of the movable sealing jaw carrier (26) being limited by a stop (24) which is preferably adjustable.

14. Packaging machine according to one of the preceding claims, characterised in that there is provided in the transverse sealing jaws (82, 82a) of one sealing jaw carrier a cutter (85) for cutting off filled and closed bags (97), at least one push rod (86, 88) acting on the cutter cooperating with an actuating surface, preferably a convex surface, preferably a cylindrical surface (92a), which is located on a shaft (28) or axis of the sealing jaw carrier, to actuate the cutter (85).

15. Packaging machine according to Claim 14, characterised in that there is associated with the push rod a return spring (98) whereof the tension is preferably adjustable.

16. Packaging machine according to one of the preceding claims, characterised in that there are provided on at least one, preferably on both transverse sealing jaws of cooperating pairs (81/82 or 81a/82a) air nozzles (73) for cool air for the cooling of the transverse sealing seam (96a, 97b).

17. Packaging machine according to Claim 16, characterised in that the shaft (28, 94) of at least one sealing jaw carrier (26, 27) contains a cool air channel (56) which communicates via a flexible line (63) with an annular channel (59) which is located in a slide part (34), and in that the annular channel (59) communicates via at least one transverse bore (65) with the hollow space of a sealing jaw holder (36), this hollow space (66) being connected in turn via a line (68) to a hollow space (70) from which the air nozzles (73) start.

18. Packaging machine according to one of Claims 16 and 17, characterised in that there is located on ventilated transverse sealing jaws (81, 81a, 82, 82a) an air distributor which contains a large-volume air collection space (70) from which transverse bores (76, 77) start which lead to a distributor channel (72) from which the air nozzles (73) start, the transverse bores (76, 77) extending as far as the outer side (78) of the air distributor (69), and in which closure plugs (79, 80) can be screwed by means of which the cross-section of flow between the air collection space (79) and the transverse bores (76, 77) is adjustable.

19. Packaging machine according to one of the preceding claims, characterise in that the ratio between the draw-off speed of the wrapping material tube (4) and the angular velocity of the sealing jaw carriers (26, 27) during one revolution of the sealing jaw carriers (26, 27) can be altered to produce an equally fast motion of the wrapping material tube (4) and transverse sealing jaws (81, 82, 81a, 82a) in the region of the sealing zone (D–C).

20. Packaging machine according to Claim 19, characterised in that the draw-off speed of the wrapping material tube (4) is constant and the angular velocity of the sealing jaw carriers (26, 27) can be altered.

21. Packaging machine according to Claim 20, characterised in that the angular velocity of the tubular bag carriers (26, 27) increases to about the centre of the sealing zone (D–C) and then decreases again.

EP 0 226 693 B1

Fig. 1

Fig. 2

Fig. 3

Fig. 4

Fig. 5

Fig. 6

Fig. 7